(19)

**Europäisches Patentamt**
**European Patent Office**
**Office européen des brevets**

(11) **EP 4 582 981 A1**

(12) **EUROPEAN PATENT APPLICATION**
published in accordance with Art. 153(4) EPC

(43) Date of publication:
09.07.2025 Bulletin 2025/28

(21) Application number: 23896464.7

(22) Date of filing: 07.11.2023

(51) International Patent Classification (IPC):
*G06F 18/22* (2023.01)

(52) Cooperative Patent Classification (CPC):
G06F 18/2113; G06F 18/22

(86) International application number:
PCT/CN2023/130090

(87) International publication number:
WO 2024/114312 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2022 CN 202211497502

(71) Applicant: China Unionpay Co., Ltd.
Shanghai 200135 (CN)

(72) Inventors:
• HE, Shuo
Shanghai 200135 (CN)

• LIU, Hongbao
Shanghai 200135 (CN)
• GAO, Pengfei
Shanghai 200135 (CN)
• QIU, Zhenyao
Shanghai 200135 (CN)
• TANG, Tao
Shanghai 200135 (CN)
• ZHENG, Jianbin
Shanghai 200135 (CN)

(74) Representative: Slingsby Partners LLP
1 Kingsway
London WC2B 6AN (GB)

(54) **OBJECT MATCHING METHOD AND APPARATUS, AND DEVICE, SYSTEM, MEDIUM AND PROGRAM PRODUCT**

(57) The present application discloses an object matching method, apparatus, device, system, medium and program product. The method includes: selecting one of first feature vectors of first objects in a first device as a first target feature vector, and calculating a first similarity parameter between the first target feature vector and each of the first feature vectors; obtaining, based on the first target feature vector and a second feature vector of a second object in a second device, a second similarity parameter between the second feature vector and the first target feature vector by a vector similarity calculation method with privacy protection; selecting a first feature vector to be matched according to the first similarity parameter, the second similarity parameter, and a similarity matching threshold; and determining, based on the first feature vector to be matched and the second feature vector, the first object successfully matched with the second object according to the similarity matching threshold by the vector similarity calculation method with privacy protection.

selecting any one of first feature vectors of two or more first objects in the first device as a first target feature vector, and calculating a first similarity parameter between the first target feature vector and each of the first feature vectors — S101

obtaining, based on the first target feature vector and a second feature vector of a second object in a second device, a second similarity parameter between the second feature vector and the first target feature vector by a vector similarity calculation method with privacy protection — S102

selecting a first feature vector to be matched from the first feature vectors according to the first similarity parameter, the second similarity parameter, and a preset similarity matching threshold — S103

determining, based on the first feature vector to be matched and the second feature vector, the first object successfully matched with the second object according to the similarity matching threshold by the vector similarity calculation method with privacy protection — S104

**Fig. 3**

EP 4 582 981 A1

## Description

### CROSS REFERENCE TO RELATED APPLICATION

This application claims priority to Chinese Patent Application No. 202211497502.0 entitled "OBJECT MATCHING METHOD, APPARATUS, DEVICE, SYSTEM, MEDIUM AND PROGRAM PRODUCT" filed on Nov. 28, 2022, the entire contents of which are incorporated herein by reference.

### TECHNICAL FIELD

The present application relates to the field of data processing, and particularly to an object matching method, apparatus, device, system, medium and program product.

### BACKGROUND

With the development of big data technology, object matching needs to be performed on two or more parties in more and more business scenarios. Object matching may occur between a user and a servicer, or between servicers. The data required for object matching may include private data. In order to ensure data security, two or more parties on which object matching is performed will not exchange original data.

In order to perform object matching on the basis of ensuring data security, two or more parties may encrypt the data respectively, and compare the encrypted data in pairs to determine a matched object. Under a condition that multiple parties each have a large amount of data, object matching will result in a large amount of computation, thus reducing the efficiency of object matching.

### SUMMARY

Embodiments of the present application provide an object matching method, apparatus, device, system, medium, and program product capable of improving the efficiency of object matching.

In a first aspect, embodiments of the present application provide an object matching method applicable to a first device, the method including: selecting any one of first feature vectors of two or more first objects in the first device as a first target feature vector, and calculating a first similarity parameter between the first target feature vector and each of the first feature vectors; obtaining, based on the first target feature vector and a second feature vector of a second object in a second device, a second similarity parameter between the second feature vector and the first target feature vector by a vector similarity calculation method with privacy protection; selecting a first feature vector to be matched from the first feature vectors according to the first similarity parameter, the second similarity parameter, and a preset similarity matching threshold, in which a number of the first feature vector to be matched is less than a number of the first feature vectors; and determining, based on the first feature vector to be matched and the second feature vector, the first object successfully matched with the second object according to the similarity matching threshold by the vector similarity calculation method with privacy protection.

In a second aspect, embodiments of the present application provide an object matching apparatus, including: a calculation module configured to select any one of first feature vectors of two or more first objects in the object matching apparatus as a first target feature vector, and calculating a first similarity parameter between the first target feature vector and each of the first feature vectors; an interactive calculation module configured to obtain, based on the first target feature vector and a second feature vector of a second object in another apparatus, a second similarity parameter between the second feature vector and the first target feature vector by a vector similarity calculation method with privacy protection; a selection module configured to select a first feature vector to be matched from the first feature vectors according to the first similarity parameter, the second similarity parameter, and a preset similarity matching threshold, in which a number of the first feature vector to be matched is less than a number of the first feature vectors; and a matching module configured to determine, based on the first feature vector to be matched and the second feature vector, the first object successfully matched with the second object according to the similarity matching threshold by the vector similarity calculation method with privacy protection.

In a third aspect, embodiments of the present application provide an electronic device, including: a processor and a memory storing computer program instructions; in which the processor, when executing the computer program instructions, implements the object matching method in the first aspect.

In a fourth aspect, embodiments of the present application provide an object matching system, including: a first device configured to execute the object matching method in the first aspect; and a second device configured to perform privacy interaction with the first device.

In a fifth aspect, embodiments of the present application provide a computer readable storage medium having computer program instructions stored thereon, in which the computer program instructions, when executed by a processor, implement the object matching method in the first aspect.

In a sixth aspect, embodiments of the present application provides a computer program product, in which instructions in the computer program product, when executed by a processor of an electronic device, cause the electronic device to perform the object matching method in the first aspect.

The embodiments of the present application provide the object matching method, apparatus, device, system, medium, and program product. The first feature vector of any first object in the first device may be selected as the first target feature vector, the first target feature vector is used as a reference feature vector, and the first similarity parameters between the first target feature vector and the first feature vectors are calculated. The first device obtains, based on the first target feature vector and the second feature vector of the second object in the second device, the second similarity parameter characterizing the similarity between the first target feature vector and the second feature vector by the vector similarity calculation method with privacy protection. By using the second similarity parameter combined with the similarity matching threshold as a reference value, a portion of the first feature vectors are selected as the feature vectors to be matched according to the first similarity parameters. Based on the feature vectors to be matched and the second feature vector, the first device performs matching between the first objects corresponding to the feature vectors to be matched and the second object corresponding to the second feature vector by the vector similarity calculation method with privacy protection. The computation amount of each vector similarity calculation with privacy protection is very large. In the object matching process according to the embodiments of the present application, the vector similarity calculation with privacy protection includes the similarity calculation with the first target feature vector and the similarity calculation with the feature vectors to be matched. Compared with an approach that similarity calculation between each first feature vector and each second feature vector is performed by the vector similarity calculation with privacy protection, the object matching process according to the embodiments of the present application reduces the times of vector similarity calculation with privacy protection, thereby reducing the computation amount resulted from object matching and increasing the efficiency of object matching.

## BRIEF DESCRIPTION OF THE DRAWINGS

In order to explain the technical solutions of the embodiments of the present application more clearly, a brief introduction to the accompanying drawings for the embodiments of this application will be provided below. For a person skilled in the art, additional drawings can be derived from these drawings without the need for inventive effort.

Fig. 1 shows a schematic architecture diagram of an example of an application of an object matching method according to an embodiment of the present application;
Fig. 2 shows a schematic architecture diagram of another example of an application of an object matching method according to an embodiment of the present application;

Fig. 3 shows a flowchart of an object matching method according to an embodiment of the present application;
Fig. 4 shows a flowchart of an object matching method according to another embodiment of the present application;
Fig. 5 shows a flowchart of an object matching method according to yet another embodiment of the present application;
Fig. 6 shows a schematic structural diagram of an object matching apparatus according to an embodiment of the present application; and
Fig. 7 shows a schematic structural diagram of an electronic device according to an embodiment of the present application.

## DETAILED DESCRIPTION

Features of various aspects and exemplary embodiments of the present application will be described in detail below. In order to make objects, technical solutions and advantages of the present application clearer, the present application is further described in detail below with reference to the drawings and specific embodiments. It should be understood that the specific embodiments described herein are only intended to explain the present application, but not to limit the present application. For those of ordinary skilled in the art, the present application may be implemented without some of those specific details. The following description of the embodiments is only for providing a better understanding of the present application by showing examples of the present application.

With the development of big data technology, artificial intelligence technology and the like, object matching needs to be performed on two or more parties in more and more business scenarios. Object matching may occur between a user and a servicer, or between servicers. The data required for object matching may include private data. In order to ensure data security, two or more parties on which object matching is performed will not exchange original data. In order to perform object matching on the basis of ensuring data security, vector similarity calculation with privacy protection may be performed on two or more parties, and data of two or more parties may be compared in pairs to determine matched objects. The information exchanged in the process of the vector similarity calculation with privacy protection is related to the data of two or more parties, but does not include the plain text of the data of two or more parties. Each vector similarity calculation with privacy protection can implement similarity calculation between one party's data and the other party's data. However, the computation amount produced by vector similarity calculation with privacy protection is very large. Under a condition that multiple parties each has a large amount of data, the computation amount will double or even increase by power, thus reducing the efficiency of object matching. For example, under a condition that one party has data for N objects and the other party also has data for N objects, a number $N^2$ of vector similarity calculations with privacy protection need to be performed on both parties to calculate the similarities between the data for N objects of one party and the data for N objects of the other party. A large amount of computation is produced by one vector similarity calculation with privacy protection, and the computation amount produced by the $N^2$ vector similarity calculations with privacy protection is even larger, thereby reducing the efficiency of matching between the two parties.

The present application provides an object matching method, apparatus, device, system, medium and program product. Similarities between feature vectors of objects in one device can be calculated, one vector similarity calculation with privacy protection is firstly performed, the feature vectors of a portion of the objects in one device are retained according to the preset similarity matching threshold, the calculated similarities and the similarities between the feature vectors of the objects in one device, and then a vector similarity calculation with privacy protection is performed with the other device according to the retained feature vectors of the portion of the objects. On the premise of ensuring data security, the vector similarity calculation with privacy protection is changed from full match to fuzzy match, which reduces the times of vector similarity calculation with privacy protection, thereby reducing the computation amount produced by object matching and increasing the efficiency of object matching.

The object matching method according to the present application can be applicable to scenarios in which object matching is performed on two or more parties, such as text matching, image search, biometric identification, and the like, which is not limited herein. In the embodiments of the present application, data of objects of different parties may be stored in different devices, and devices of different parties do not directly exchange plaintext data with each other, so as to ensure data security. The objects may include texts, images, biometric features, etc., which is not limited herein. In the embodiments of the present application, object matching is realized by performing similarity calculation on feature vectors of objects across devices of multiple parties, so as to enable object matching functions such as text matching, image search, biometric identification, etc.

Under a condition that the object matching method is applied among multiple parties, the flow of object matching between every two parties is the same as that of object matching between two parties where only two parties exist.

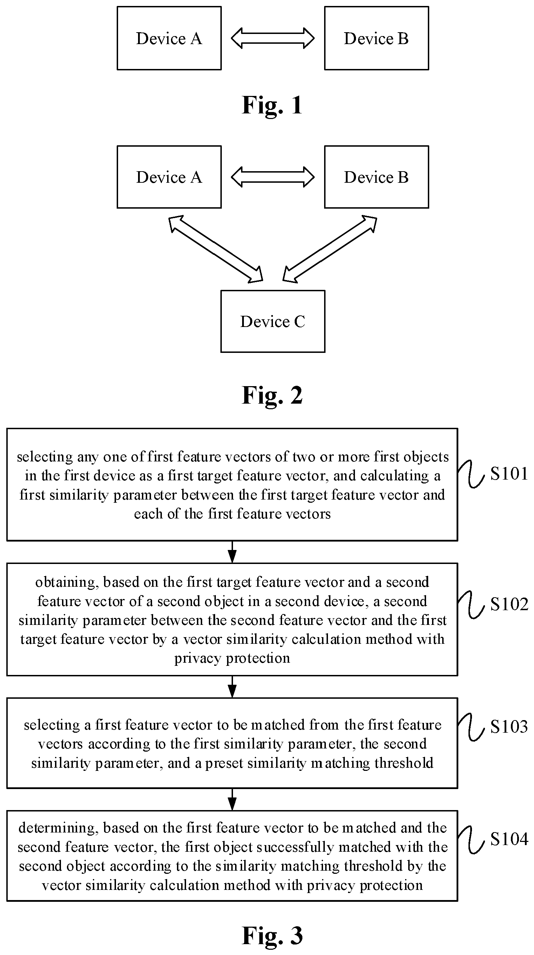

Fig. 1 shows a schematic architecture diagram of an example of an application of an object matching method according to an embodiment of the present application. As shown in Fig. 1, the object matching method can be applied between device A and device B, in which the device A belongs to one party and the device B belongs to the other party. The device A may communicate with the device B, and in the embodiments of the present application, matching may be performed on objects stored in the device A and objects stored in the device B.

Fig. 2 shows a schematic architecture diagram of another example of an application of an object matching method according to an embodiment of the present application. As shown in Fig. 2, the object matching method can be applied among device A, device B, and device C, in which the device A belongs to one party, the device B belongs to another party, and the device C belongs to yet another party. The device A may communicate with the device B, the device B may communicate with the device C, and the device A may communicate with the device C. In the embodiments of the present application, matching may be performed on objects stored in the device A and objects stored in the device B, matching may be performed on the objects stored in the device B and objects stored in the device C, and matching may be performed on the objects stored in the device A and the objects stored in the device C.

For ease of description, devices of two parties on which object matching is performed are referred to as a first device and a second device, respectively. For example, the device A in Fig. 1 may be the first device and the device B may be the second device; alternatively, the device A in Fig. 1 may be the second device and the device B may be the first device. For another example, for the devices A and B in Fig. 2, when the device A is the first device, the device B may be the second device, and when the device A is the second device, the device B may be the first device; for the devices B and C in Fig. 2, when the device B is the first device, the device C may be the second device, and when the device B is the second device, the device C may be the first device; for the device A and the device C in Fig. 2, when the device A is the first device, the device C may be the second device, and when the device A is the second device, the device C may be the first device.

An object stored in the first device is referred to as a first object, and a feature vector of the first object is referred to as a first feature vector, and the first feature vector can characterize a feature of the first object, i.e., characterize the first object. An object stored in the second device is referred to as a second object, and a feature vector of the second object is referred to as a second feature vector, and the second feature vector can characterize a feature of the second object, i.e., characterize the second object. In the embodiments of the present application, first feature vectors of two or more first objects may be included in the first device, and second feature vectors of one or more second objects may be included in the second device.

The object matching method, apparatus, device, system, medium, and program product according to the present application are described below respectively.

In a first aspect of the present application, there is provided an object matching method applicable to a first device, that is, the object matching method may be executed by the first device. Fig. 3 shows a flowchart of an object matching method according to an embodiment of the present application. As shown in Fig. 3, the object matching method may include steps S101 to S104.

In step S101, any one of first feature vectors of two or more first objects in the first device is selected as a first target feature vector, and a first similarity parameter between the first target feature vector and each of the first feature vectors is calculated.

The first feature vector selected as the first target feature vector may be any one of the first feature vectors in the first device. The similarity parameter between the first target feature vector and each of the first feature vectors is calculated. The first similarity parameter is a similarity parameter between the first target feature vector and the first feature vector. The similarity parameter is used to characterize the similarity, and the similarity parameter can be positively or negatively correlated with the similarity. In order to facilitate understanding, in the embodiments of the present application, the negative correlation between the similarity parameter and the similarity is taken as an example for description, that is, the less the similarity parameter, the higher the characterized similarity.

It should be noted that the computation amount produced by the similarity calculation without privacy protection between feature vectors in a same device is much less than the computation amount produced by the similarity calculation with privacy protection between different devices.

The first feature vectors may be generated and stored in the first device in advance. Alternatively, relevant data of the first object may be acquired during object matching, and the first feature vectors may be generated according to the relevant data of the first object. For example, the first object stored in the first device is an image, and when the object matching is performed, the first feature vectors of the image may be generated according to the related data of the image.

In some examples, after obtaining the first similarity parameters, a similarity parameter matrix may be generated according to the first similarity parameters obtained with each first feature vector as the first target feature vector. Elements in the similarity parameter matrix are the first similarity parameters. The first similarity parameters in a same row of the similarity parameter matrix correspond to a same first target feature vector, or the first similarity parameters in a same column of the similarity parameter matrix correspond to a same first target feature vector.

For example, a first feature vector a1, a first feature vector a2, a first feature vector a3, a first feature vector a4, and a first feature vector a5 are stored in the first device, and first similarity parameters of the first feature vectors in pairs are calculated, and the similarity parameter matrix obtained according to the first similarity parameters may be shown as follows:

$$
\begin{bmatrix}
x_{11} & x_{12} & x_{13} & x_{14} & x_{15} \\
x_{21} & x_{22} & x_{23} & x_{24} & x_{25} \\
x_{31} & x_{32} & x_{33} & x_{34} & x_{35} \\
x_{41} & x_{42} & x_{43} & x_{44} & x_{45} \\
x_{51} & x_{52} & x_{53} & x_{54} & x_{55}
\end{bmatrix}
$$

Herein, $x_{ij}$ is a first similarity parameter between the first feature vector ai and the first feature vector aj, and in the similarity matrix, i is any one integer of 1 to 5, and j is any one integer of 1 to 5. A first target feature vector corresponding to the first similarity parameters in the first row is the first feature vector a1, a first target feature vector corresponding to the first similarity parameters in the second row is the first feature vector a2, a first target feature vector corresponding to the first similarity parameters in the third row is the first feature vector a3, a first target feature vector corresponding to the first similarity parameters in the fourth row is the first feature vector a4, and a first target feature vector corresponding to the first similarity parameters in the fifth row is the first feature vector a5. A first target feature vector corresponding to the first similarity parameters in the first column is the first feature vector a1, a first target feature vector corresponding to the first similarity parameters in the second column is the first feature vector a2, a first target feature vector corresponding to the first similarity parameters in the third column is the first feature vector a3, a first target feature vector corresponding to the first similarity parameters in the fourth column is the first feature vector a4, and a first target feature vector corresponding to the first similarity parameters in the fifth column is the first feature vector a5.

It is more convenient to store the first similarity parameters by using the matrix, and it is also more convenient to extract any one of the first similarity parameters from the matrix for subsequent steps.

In step S102, a second similarity parameter between the first target feature vector and a second feature vector of a second object in a second device is obtained by a vector similarity calculation method with privacy protection based on the first target feature vector and the second feature vector.

The vector similarity calculation method with privacy protection herein refers to a method for calculating similarities between vectors of two parties by cryptographic algorithm under a condition that original vectors of the two parties stay locally. Algorithms such as Oblivious Transfer (OT) Protocol, homomorphic encryption, and the like may be used for implementing the method. The vector similarity calculation method with privacy protection can ensure the data security of two or more parties.

The second similarity parameter is a similarity parameter of the first device and the second device obtained by the vector similarity calculation method with privacy protection based on the first target feature vector and the second feature vector, and the second similarity parameter can characterize the similarity between the first target feature vector and the second feature vector.

In step S103, a first feature vector to be matched is selected from the first feature vectors according to the first similarity parameter, the second similarity parameter, and a preset similarity matching threshold.

A number of the first feature vectors to be matched is less than a number of the first feature vectors. In step S103, a portion of the first feature vectors are filtered out according to the first similarity parameters, the second similarity parameters, and the preset similarity matching threshold, and the remained first feature vectors are the first feature vectors to be matched obtained after selection. The similarity matching threshold is a threshold used to determine whether two items are matched successfully. Under a condition that the similarity parameter is negatively correlated with the similarity, the similarity parameter being less than or equal to the similarity matching threshold indicates that the two items are matched successfully; and the similarity being greater than the similarity matching threshold indicates that the two items are not matched successfully. Under a condition that the similarity parameter is positively correlated with the similarity, the similarity parameter being greater than or equal to the similarity matching threshold indicates that the two items are matched successfully; and the similarity parameter being less than the similarity matching threshold indicates that the two items are not matched successfully.

The first target feature vector is any one of the first feature vectors, and the first target feature vector may be a first feature vector of a first object that is matched with a second object successfully, or may be a first feature vector of a first object that is not matched with the second object successfully. In order to reduce the times of similarity calculation with privacy protection, the second similarity parameter is obtained by using the first target feature vector as a reference vector, and then the first feature vector to be matched is selected according to the relationship among the first similarity parameter, the second similarity parameter and the similarity matching threshold. In the embodiments of the present application, an idea of triangular inequality is used innovatively. The second similarity parameter is regarded as a first side of a triangle, the similarity parameter between the first feature vector of the matched first object and the second feature vector corresponding to the second object is regarded as a second side of the triangle. Since the similarity parameter between the first feature vector of the matched first object and the second feature vector corresponding to the second object is less than or equal to the similarity matching threshold, the similarity matching threshold is regarded as the second side of the triangle and the first similarity parameter is regarded as a third side of the triangle for ease of calculation. The second similarity parameter, the similarity matching threshold, and the first similarity parameter described satisfying the triangular inequality means that the first feature vector corresponding to the first similarity parameter cannot be successfully matched with the second feature vector, and therefore, the first feature vector for which the relationship among the first similarity parameter, the second similarity parameter, and the similarity matching threshold satisfies the triangular inequality is filtered out to reduce the of times of similarity calculation with privacy protection. A first feature vector for which the relationship among the first similarity parameter, the second similarity parameter and the similarity matching threshold does not satisfy the triangular inequality is selected, and the similarity calculation with privacy protection is performed in a subsequent process to determine the first object successfully matched with the second object. The first feature vector to be matched includes a first feature vector for which the relationship among the first similarity parameter, the second similarity parameter and the similarity matching threshold does not satisfy the triangular inequality.

In step S104, based on the first feature vector to be matched and the second feature vector, the first object successfully matched with the second object is determined by the vector similarity calculation method with privacy protection according to the similarity matching threshold.

The first object corresponding to the first feature vector to be matched is relatively closer to the second object, but it is necessary to further determine whether the first object corresponding to the first feature vector to be matched and the second object corresponding to the second feature vector are successfully matched. Based on the first feature vectors to be matched and the second feature vectors, a fifth similarity parameter between the first feature vector to be matched and the second feature vector can be obtained by the vector similarity calculation method with privacy protection. According to the fifth similarity parameter and the similarity matching threshold, it is determined whether the first object corresponding to the first feature vector to be matched and the second object corresponding to the second feature vector are successfully matched. Specifically, under a condition that the fifth similarity parameter is less than or equal to the similarity matching threshold, it is determined that the first object corresponding to the first feature vector to be matched and the second object corresponding to the second feature vector are successfully matched; under a condition that the fifth similarity parameter is greater than the similarity matching threshold, it is determined that the first object corresponding to the first feature vector to be matched and the second object corresponding to the second feature vector are not successfully matched.

As can be seen from the above, in the process of matching any one of the objects in the second device with N objects in the first device, according to the embodiments of the present application, similarity calculation with privacy protection does not need to be performed N times, but instead similarity calculation with privacy protection only needs to be performed once in step S102 and similarity calculation with privacy protection is performed for fewer times in step S104, and a total number of times of similarity calculation with privacy protection is less than N, which can reduce a large amount of calculation.

Note that, the first device may or may not include the first object successfully matched with the second object. The above steps S101 to S104 may be used for each matching of the first object and the second object, and each second object may be matched with the first object in sequence until the matching has been performed for each second object.

In the embodiments of the present application, the first feature vector of any one of the first objects in the first device may be selected as the first target feature vector, and the first target feature vector may be used as the reference feature vector for calculating the first similarity parameters between the first target feature vector and the first feature vectors. The first device obtains, based on the first target feature vector and the second feature vector of a second object in the second device, the second similarity parameter characterizing the similarity between the first target feature vector and the second feature vector by the vector similarity calculation method with privacy protection. By using the second similarity parameter combined with the similarity matching threshold as a reference value, a portion of the first feature vectors are selected as the feature vectors to be matched according to the first similarity parameters. Based on the feature vectors to be matched and the second feature vector, the first device performs matching between the first objects corresponding to the feature vectors to be matched and the second object corresponding to the second feature vector by the vector similarity calculation method with privacy protection. The computation amount of each similarity calculation with privacy protection is very large. In the object matching process according to the embodiments of the present application, the similarity calculation with privacy protection includes the similarity calculation with the first target feature vector and the similarity calculation with the feature vectors to be matched. Compared with an approach that similarity calculation between each first feature vector and each second feature vector is performed by the vector similarity calculation with privacy protection, the object matching process according to the embodiments of the present application reduces the times of vector similarity calculation with privacy protection, thereby reducing the computation amount resulted from object matching and increasing the efficiency of object matching.

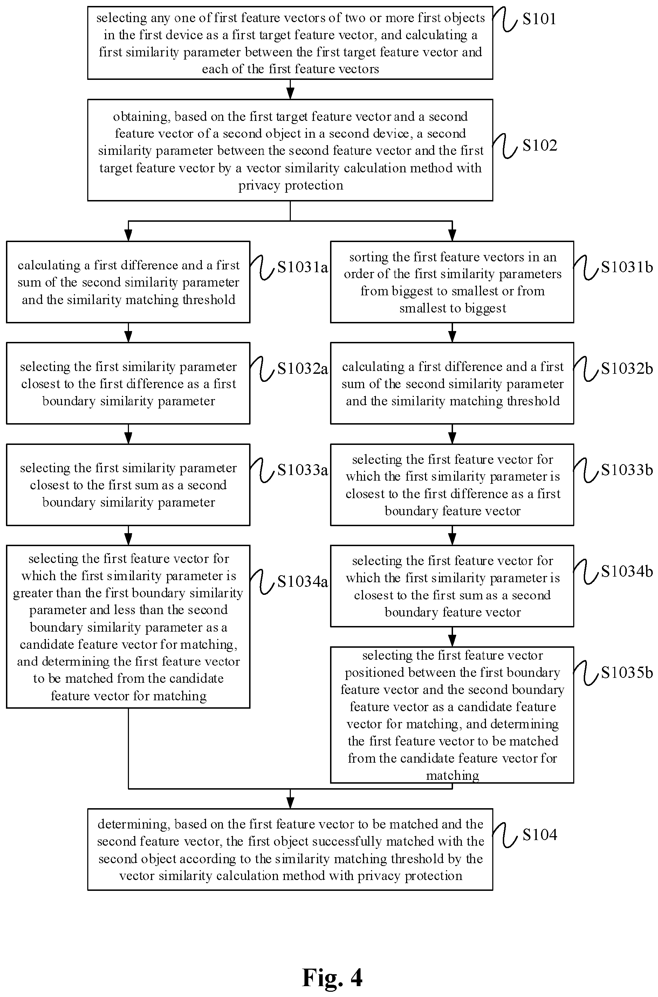

In some embodiments, the difference and the sum of the second similarity parameter and the similarity matching threshold may be used as reference values for selecting the first feature vector to be matched from the first feature vectors. Fig. 4 shows a flowchart of an object matching method according to another embodiment of the present application. Fig. 4 differs from Fig. 3 in that step S103 in Fig. 3 may be specifically divided into steps S103 1a to S1034a, or may be specifically divided into steps S1031b to S1035b.

In step S1031a, a first difference and a first sum of the second similarity parameter and the similarity matching threshold are calculated.

The first difference is a difference between the second similarity parameter and the similarity matching threshold. The first sum is a sum of the second similarity parameter and the similarity matching threshold.

In step S1032a, the first similarity parameter closest to the first difference is selected as a first boundary similarity parameter.

The first similarity parameter closest to the first difference may be a first similarity parameter with the smallest absolute value of the difference from the first difference. The first boundary similarity parameter is a lower limit value of the first similarity parameter corresponding to the first feature vector to be matched.

In step S1033a, the first similarity parameter closest to the first sum is selected as a second boundary similarity parameter.

The first similarity parameter closest to the first sum may be a first similarity parameter with the smallest absolute value of the difference from the first sum. The first boundary similarity parameter is an upper limit value of the first similarity parameter corresponding to the first matching feature vector to be matched.

In step S1034a, the first feature vector for which the first similarity parameter is greater than the first boundary similarity parameter and less than the second boundary similarity parameter is selected as a candidate feature vector for matching, and the first feature vector to be matched is determined from the candidate feature vector for matching.

Selecting a first feature vector for which the first similarity parameter is greater than the first boundary similarity parameter and less than the second boundary similarity parameter is equivalent to filtering out a first feature vector for which the first similarity parameter is less than or equal to the first boundary similarity parameter and a first feature vector for which the first similarity parameter is greater than or equal to the second boundary similarity parameter.

In step S1031b, the first feature vectors are sorted in an order of the first similarity parameters from biggest to smallest or from smallest to biggest.

In step S1032b, a first difference and a first sum of the second similarity parameter and the similarity matching threshold are calculated.

For specific contents of the first difference and the first sum, reference can be made to the relevant description in step S103 1a above, which is not repeated herein.

In step S1033b, the first feature vector for which the first similarity parameter is closest to the first difference is selected as a first boundary feature vector.

For the content regarding the first similarity parameter closest to the first difference, reference can be made to relevant description in the above step S1032, which is not repeated herein. The position of the first boundary feature vector in the first feature vectors arranged in order may be used as a lower limit position of the selection range of the first feature vector to be matched.

In step S1034b, the first feature vector for which the first similarity parameter is closest to the first sum is selected as a second boundary feature vector.

For the content regarding first similarity parameter closest to the first sum, reference can be made to relevant description in the above step S1033a, which is not repeated herein. The position of the second boundary feature vector in the first feature vectors arranged in order can be used as an upper limit position of the selection range of the first feature vector to be matched.

In step S1035b, the first feature vector positioned between the first boundary feature vector and the second boundary feature vector is selected as a candidate feature vector for matching, and the first feature vector to be matched is determined from the candidate feature vector for matching.

Selecting the first feature vector positioned between the first boundary feature vector and the second boundary feature vector is equivalent to filtering out the first boundary feature vector, the second boundary feature vector and the first feature vector outside the range defined by the first boundary feature vector and the second boundary feature vector.

For example, the first objects and the second objects are merchant names, the first objects stored in the first device include five merchant names of "A1 City X1 Store", "A1 City X2 Restaurant", "A1X4", "B1X5" and "C2 Road Fruit Shop", and the second objects stored in the second device include three merchant names of "A1 City B1 New District X1 Store", "A1 City X2 Restaurant" and "C1 Road X3 Malatang". The first feature vectors of the five merchant names in the first device are (1, 2, 1, 1, 3), (3, 4, 2, 2, 1), (3, 6, 2, 7, 2), (3, 5, 2, 1, 2), and (3, 5, 2, 3, 2), respectively, and are denoted as the first feature vectors a1, a2, a3, a4, and a5, which are all feature vectors local to the first device. The first feature vectors of the three merchant names in the second device are (1, 2, 1, 2, 3), (3, 4, 2, 2, 1) and (4, 5, 7, 1, 1), respectively, and are denoted as second feature vectors b1, b2 and b3, which are all feature vectors local to the second device. Herein, for example, the similarity parameter is the Euclidean distance, and the Euclidean distances between the first feature vector a1, the first feature vector a2, the first feature vector a3, the first feature vector a4, and the first feature vector a5 in pairs are shown in Table 1 below. For example, the Euclidean distance between the first feature vector a1 and the first feature vector a1 is 0, and the Euclidean distance between the first feature vector a1 and the first feature vector a2 is 3.74.

Table 1

|    | a1   | a2   | a3   | a4   | a5   |
|----|------|------|------|------|------|
| a1 | 0    | 3.74 | 7.66 | 3.87 | 4.36 |
| a2 | 3.74 | 0    | 5.48 | 1.73 | 3.87 |
| a3 | 7.66 | 5.48 | 0    | 6.08 | 4.12 |
| a4 | 3.87 | 1.73 | 6.08 | 0    | 2    |
| a5 | 4.36 | 3.87 | 4.12 | 2    | 0    |

For the second feature vector b1 of the second device, any one of the first feature vectors may be selected as the first target feature vector. For example, if the first feature vector a1 is selected as the first target feature vector, then according to the descending order of the first similarity parameters, the arrangement order of the first feature vectors is a3, a5, a4, a2, a1, which can be denoted as a1 < a3, a5, a4, a2, a1 >. Similarly, if the first feature vector a2, the first feature vector a3, the first feature vector a4 and the first feature vector a5 are respectively selected as the first target feature vector, then according to the descending order of the first similarity parameters, the arrangement orders of the first feature vectors corresponding to the respective first target feature vectors are denoted as a2 < a3, a5, a1, a4, a2 >, a3 < a1, a4, a2, a5, a3 >, a4 < a3, a1, a5, a2, a4 > and a5 < a1, a3, a2, a4, a5 >, respectively,.

Herein, the first feature vector a4 is selected as the first target feature vector as an example, and the first similarity parameters between the first feature vector a4 and the first feature vectors a1, a2, a3, a4, and a5 are 3.87, 1.73, 6.08, 0, and 2, respectively. The arrangement order of the first feature vectors is denoted as a4 < a3, a1, a5, a2, a4 >. The second device performs a privacy interaction with the second feature vector b1 based on the first feature vector a4, and the obtained second similarity parameter between the first feature vector a4 and the second feature vector b1 is 4. Assuming that the similarity matching threshold is 1.5, the first difference is 2.5, the first sum is 5.5, the first feature vector for which the first similarity parameter is closest to the first difference is a5, and the first feature vector for which the first similarity parameter is closest to the first sum is a3, then there is only one candidate feature vector for matching, which is the first feature vector a1. Since a number of the candidate feature vectors for matching is 1, the first feature vector a1 may be directly regarded as the feature vector to be matched. Privacy interaction with the second feature vector b1 is performed based on the first feature vector a1, the obtained fifth similarity parameter between the first feature vector a1 and the second feature vector b1 is 1, and the fifth similarity is less than the similarity matching threshold of 1.5, which indicates that the first object "A1 City X1 Store" and the second object "A1 City B1 New District X1 Store" are successfully matched.

In the embodiments of the present application, the first similarity parameters are sorted according to their values and combined with the triangular inequality, so that the application effect of the triangular inequality can be further optimized, the first feature vectors satisfying the triangular inequality can be more conveniently determined. The first feature vectors satisfying the triangular inequality can be filtered out by filtering out the first feature vectors outside a position range, and the times of similarity calculation with privacy protection can be reduced, thereby reducing the computation amount produced by object matching and improving the efficiency of object matching.

In the above embodiment, the candidate feature vectors for matching include the first feature vectors to be matched. In some examples, the candidate feature vectors for matching are the first feature vectors to be matched, that is, the candidate feature vectors for matching are the same as the first feature vectors to be matched. In some other examples, a portion of the candidate feature vectors for matching are the first feature vectors to be matched.

According to the application scenarios, the application requirements, the number of candidate feature vectors for matching, and the like of the object matching, the candidate feature vectors for matching may be directly determined as the first feature vectors to be matched for use in subsequent steps, or the candidate feature vectors for matching may be further filtered to obtain the first feature vectors to be matched, which is not limited herein.

In some examples, under a condition that the number of the candidate feature vectors for matching is equal to 1, the candidate feature vector for matching may be determined as the first feature vector to be matched.

In some examples, under a condition that the number of the candidate feature vectors for matching is greater than 1, any one of the candidate feature vectors for matching may be selected as the first target feature vector, and third similarity parameters between the first target feature vector and the candidate feature vectors for matching may be calculated respectively; a fourth similarity parameter between the second feature vector and the first target feature vector may be obtained by the vector similarity calculation method with privacy protection based on the first target feature vector and the second feature vector; and a new candidate feature vector for matching may be determined according to the third similarity parameters, the fourth similarity parameter, and the preset similarity matching threshold until the number of the candidate feature vectors for matching is less than or equal to 1.

In this example, the first target feature vector is selected from the candidate feature vectors for matching. The third similarity parameters are similarity parameters between the first target feature vector selected from the candidate feature vectors for matching and the candidate feature vectors for matching. For details of obtaining, based on the first target feature vector and the second feature vector, the fourth similarity parameter by the vector similarity calculation method with privacy protection, reference can be made to the relevant description of obtaining, based on the first target feature vector and the second feature vector, the second similarity parameter between the second feature vector and the first target feature vector by the vector similarity calculation method with privacy protection in the above embodiment, which is not repeated herein. For details of determining the new candidate feature vector for matching according to the third similarity parameters, the fourth similarity parameter, and the preset similarity matching threshold, reference can be made to the relevant description of steps S103 1a to S1034a, or the relevant description of steps S1031b to S1035b. If the number of the new candidate feature vectors for matching determined this time is still greater than 1, the above steps are repeated until the number of the determined candidate feature vectors for matching is less than or equal to 1. Under a condition that the number of the determined candidate feature vectors for matching is equal to 1, the candidate feature vector for matching is determined as the first feature vector to be matched. Under a condition that the number of the determined candidate feature vectors for matching is less than 1, i.e., 0, it means that no first object is matched with the second object.

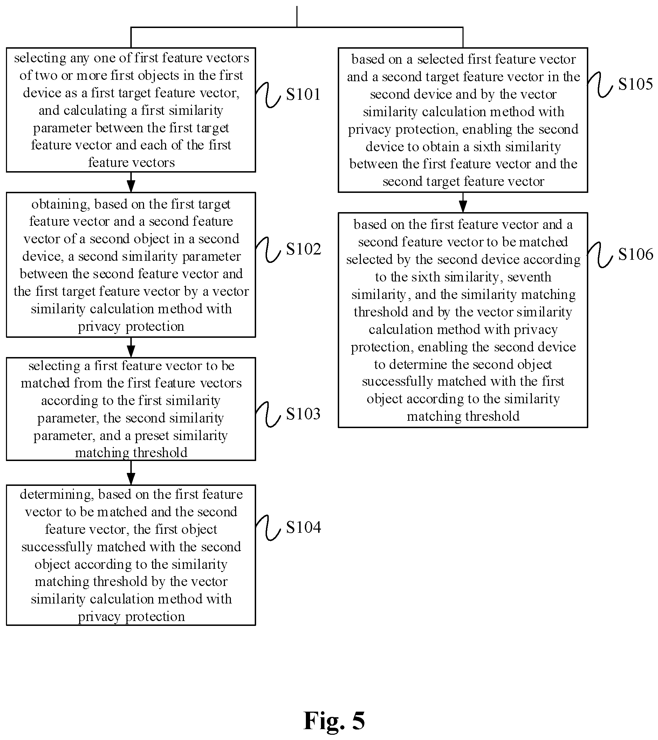

In some embodiments, when the first device performs the object matching method, the second device may also perform the object matching method by the vector similarity calculation method with privacy protection to determine the second object successfully matched with the first object. Fig. 5 shows a flowchart of an object matching method according to yet another embodiment of the present application. Fig. 5 differs from Fig. 3 in that, the object matching method shown in Fig. 5 may further include steps S105 and S106.

In step S105, based on a selected first feature vector and a second target feature vector in the second device and by the vector similarity calculation method with privacy protection, the second device obtains a sixth similarity between the first feature vector and the second target feature vector.

The second target feature vector is any second feature vector selected by the second device from second feature vectors of two or more second objects. The sixth similarity is the sixth similarity between the first feature vector and the second target feature vector obtained by the second device. For details of the second device performing vector similarity calculation with privacy protection with the first device to obtain the sixth similarity, reference can be made to the relevant description of the first device performing vector similarity calculation with privacy protection with the second device to obtain the second similarity parameter based on the first target feature vector and the second feature vector in the above embodiment, which is not be repeated herein.

In some examples, the first device may obtain a first feature vector that is not successfully matched with the second feature vector, and the second device obtains, based on the first feature vector and the second target feature vector, the sixth similarity between the first feature vector and the second target feature vector by the vector similarity calculation method with privacy protection. That is, the first feature vector selected in step S105 includes a first feature vector that is not successfully matched with the second feature vector. In some scenarios in which the first objects are one-to-one matched with the second objects, one of the first objects will not be successfully matched with a plurality of second objects, and a secondary matching does not need to be performed on the first object that has been successfully matched, which can further reduce the number of times for matching and improve the speed of object matching, thereby further increasing the efficiency of object matching.

In step S106, based on the first feature vector and a second feature vector to be matched selected by the second device according to the sixth similarity, seventh similarity, and the similarity matching threshold and by the vector similarity calculation method with privacy protection, the second device determines the second object successfully matched with the first object according to the similarity matching threshold.

The second device may select any second feature vector from the second feature vectors of the two or more second objects as the second target feature vector, and calculate seventh similarity parameter between the second target feature vector and each of the second feature vectors. The seventh similarity include a similarity between the second target feature vector and each of the second feature vectors calculated by the second device. The second device may select a second feature vector to be matched from the second feature vectors according to the seventh similarity parameter, the sixth similarity parameter, and the similarity matching threshold, in which a number of the second feature vectors to be matched is less than a number of the second feature vectors. The second device and the first device may determine the second object successfully matched with the first object based on the second feature vectors to be matched and the first feature vectors according to the similarity matching threshold by the vector similarity calculation method with privacy protection.

The second device may have the same function as the first device, that is, the second device may also perform the object matching method. The second device selects the second target feature vector, calculates the seventh similarity parameter between the second target feature vector and each of the second feature vectors, obtains the sixth similarity between the first feature vector and the second target feature vector by the vector similarity calculation method with privacy protection, selects the second feature vector to be matched, and determines the second object successfully matched with the first object based on the second feature vector to be matched and the first feature vector according to the similarity matching threshold by the vector similarity calculation method with privacy protection. For details of the above, reference can be made to the relevant description of steps S101 to S104, S1031a to S 1034a, and S1031b to S1035b in the above embodiment, which is not repeated herein.

The order of steps S105 to S106 and steps S101 to S104 is not limited herein, and the execution of steps S105 to S106 and the execution of steps S101 to S104 may be independent of each other. For example, steps S105 to S106 may be executed before steps S101 to S104, steps S105 to S106 may be executed after steps S101 to S104, or steps S105 to S106 may be executed simultaneously with steps S101 to S104.

Both the first device and the second device execute the object matching method, and a plurality of object matching may be allocated to both parties for execution, further reducing the time spent for object matching, and further increasing the efficiency of object matching.

In the above embodiment, the first similarity parameter, the second similarity parameter, the third similarity parameter, the fourth similarity parameter, the fifth similarity parameter, the sixth similarity parameter, and the seventh similarity parameter are all similarity parameters. In some examples, the similarity parameter may include, but is not limited to, Euclidean distance or cosine similarity.

It should be noted that the acquisition, storage, use, processing, etc. of information and data in the embodiments of the present application are all authorized by users or relevant institutions, and comply with relevant regulations of national laws and regulations.

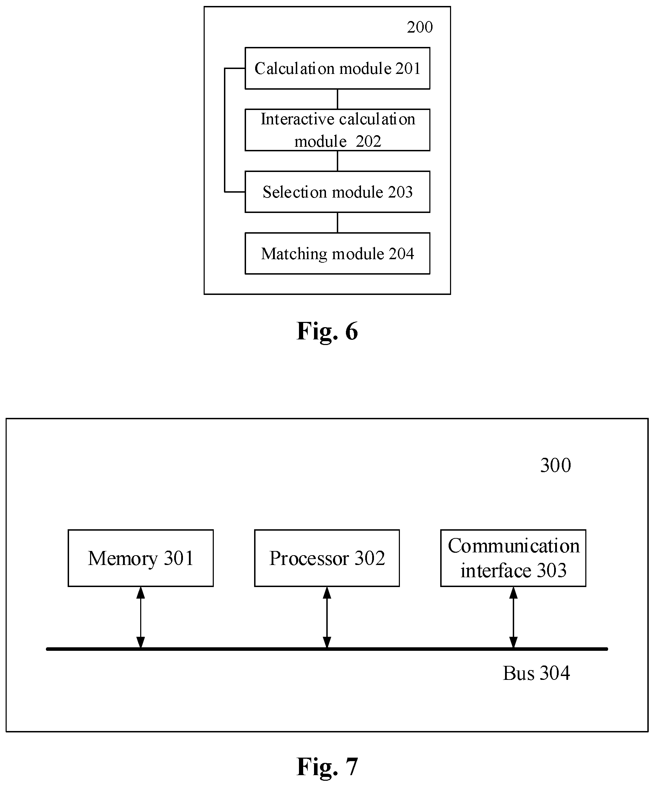

In a second aspect of the present application, an object matching apparatus is provided. The object matching apparatus stores first feature vectors of two or more first objects. Fig. 6 shows a schematic structural diagram of an object matching apparatus according to an embodiment of the present application. As shown in Fig. 6, the object matching apparatus 200 may include a calculation module 201, an interactive calculation module 202, a selection module 203, and a matching module 204.

The calculation module 201 may be configured to select any one of first feature vectors of two or more first objects in the object matching apparatus 200 as a first target feature vector, and calculate a first similarity parameter between the first target feature vector and each of the first feature vectors.

The interactive calculation module 202 may be configured to obtain, based on the first target feature vector and a second feature vector of a second object in another apparatus, a second similarity parameter between the second feature vector and the first target feature vector by a vector similarity calculation method with privacy protection.

Another apparatus includes second feature vectors of one or more second objects.

The selection module 203 may be configured to select a first feature vector to be matched from the first feature vectors according to the first similarity parameter, the second similarity parameter, and a preset similarity matching threshold.

A number of the first feature vector to be matched is less than a number of the first feature vectors.

The matching module 204 may be configured to determine, based on the first feature vector to be matched and the second feature vector, the first object successfully matched with the second object according to the similarity matching threshold by the vector similarity calculation method with privacy protection.

In the embodiments of the present application, the first feature vector of any first object in the first device may be selected as the first target feature vector, the first target feature vector is used as a reference feature vector, and the first similarity parameters between the first target feature vector and the first feature vectors are calculated. The first device obtains, based on the first target feature vector and the second feature vector of the second object in the second device, the second similarity parameter characterizing the similarity between the first target feature vector and the second feature vector by the vector similarity calculation method with privacy protection. By using the second similarity parameter combined with the similarity matching threshold as a reference value, a portion of the first feature vectors are selected as the feature vectors to be matched according to the first similarity parameters. Based on the feature vectors to be matched and the second feature vector, the first device performs matching between the first objects corresponding to the feature vectors to be matched and the second object corresponding to the second feature vector by the vector similarity calculation method with privacy protection. The computation amount of each vector similarity calculation with privacy protection is very large. In the object matching process according to the embodiments of the present application, the vector similarity calculation with privacy protection includes the similarity calculation with the first target feature vector and the similarity calculation with the feature vectors to be matched. Compared with an approach that similarity calculation between each first feature vector and each second feature vector is performed by the vector similarity calculation with privacy protection, the object matching process according to the embodiments of the present application reduces the times of vector similarity calculation with privacy protection, thereby reducing the computation amount resulted from object matching and increasing the efficiency of object matching.

In some embodiments, the selection module 203 may be configured to: calculate a first difference and a first sum of the second similarity parameter and the similarity matching threshold; select the first similarity parameter closest to the first difference as a first boundary similarity parameter; select the first similarity parameter closest to the first sum as a second boundary similarity parameter; select the first feature vector for which the first similarity parameter is greater than the first boundary similarity parameter and less than the second boundary similarity parameter as a candidate feature vector for matching, and determine the first feature vector to be matched from the candidate feature vector for matching.

In some embodiments, the selection module 203 may be configured to: sort the first feature vectors in an order of the first similarity parameters from biggest to smallest or from smallest to biggest; calculate a first difference and a first sum of the second similarity parameter and the similarity matching threshold; select the first feature vector for which the first similarity parameter is closest to the first difference as a first boundary feature vector; select the first feature vector for which the first similarity parameter is closest to the first sum as a second boundary feature vector; and select the first feature vector positioned between the first boundary feature vector and the second boundary feature vector as a candidate feature vectors for matching, and determine the first feature vector to be matched from the candidate feature vector for matching.

In some examples, the candidate feature vector for matching is the first feature vector to be matched.

In some examples, a number of the candidate feature vector for matching is greater than 1.

The calculation module 201 may be further configured to select any one of the candidate feature vectors for matching as the first target feature vector, and respectively calculating a third similarity parameter between the first target feature vector and each of the candidate feature vectors for matching.

The interactive calculation module 202 may further be configured to obtain, based on the first target feature vector and the second feature vector, a fourth similarity parameter between the second feature vector and the first target feature vector by the vector similarity calculation method with privacy protection.

The selection module 203 may further be configured to determine a new candidate feature vector for matching according to the third similarity parameter, the fourth similarity parameter, and the preset similarity matching threshold until the number of the candidate feature vectors for matching is less than or equal to 1.

In some embodiments, the interactive calculation module 202 may be configured to obtain, based on the first feature vector to be matched and the second feature vector, a fifth similarity parameter of the first feature vector to be matched and the second feature vector respectively by the vector similarity calculation method with privacy protection.

The matching module 204 may be configured to determine that the first object corresponding to the first feature vector to be matched is successfully matched with the second object under a condition that the fifth similarity parameter is less than or equal to the similarity matching threshold.

In some embodiments, the interactive calculation module 202 may be further configured to: based on a selected first feature vector and a second target feature vector in another apparatus and by the vector similarity calculation method with privacy protection, enable the another apparatus to obtain a sixth similarity between the first feature vector and the second target feature vector; and based on the first feature vector and a second feature vector to be matched selected by the another apparatus according to the sixth similarity, a seventh similarity, and the similarity matching threshold and by the vector similarity calculation method with privacy protection, enable the another apparatus to determine the second object successfully matched with the first object according to the similarity matching threshold.

The second target feature vector is any second feature vector selected by the another device from second feature vectors of two or more second objects. The seventh similarity includes a similarity between the second target feature vector and each of the second feature vectors calculated by the another device.

In some examples, the selected first feature vector includes the first feature vector that is not successfully matched with the second feature vector.

In some embodiments, the calculation module 201 may be configured to generate a similarity parameter matrix according to the first similarity parameters obtained in a way that each of the first feature vectors acts as the first target feature vector.

Herein, the first similarity parameters in a same row of the similarity parameter matrix correspond to a same first target feature vector, or the first similarity parameters in a same column of the similarity parameter matrix correspond to a same first target feature vector.

In the above embodiment, the first similarity parameter, the second similarity parameter, the third similarity parameter, the fourth similarity parameter, the fifth similarity parameter, the sixth similarity parameter, and the seventh similarity parameter are all similarity parameters. In some examples, the similarity parameter may include, but is not limited to, Euclidean distance or cosine similarity.

In a third aspect of the present application, an electronic device is further provided. Fig. 7 shows a schematic structural diagram of an electronic device according to an embodiment of the present application. As shown in Fig. 7, the electronic device 300 includes a memory 301, a processor 302, and a computer program stored in the memory 301 and executable on the processor 302.

In some examples, the processor 302 may include a central processing unit (CPU), an application specific integrated circuit (ASIC), or one or more integrated circuits configured to implement the embodiments of the present application.

The memory 301 may include a Read-Only Memory (ROM), a Random Access Memory (RAM), a magnetic disk storage medium device, an optical storage medium device, a flash memory device, an electrical, optical or any other physical/tangible memory storage device. Accordingly, the memory generally includes one or more tangible (non-transitory) computer-readable storage media (for example, memory devices) encoded with software including computer-executable instructions, and the software, when executed (for example, by one or more processors), is operable to perform operations described with reference to the object matching method according to the embodiments of the present application.

The processor 302 reads executable program codes stored in the memory 301 and executes computer programs corresponding to executable program codes to implement the object matching method in the above embodiments.

In some examples, the electronic device 300 may further include a communication interface 303 and a bus 304. Here, as shown in Fig. 7, the memory 301, the processor 302, and the communication interface 303 are connected through the bus 304 and communicate with each other.

The communication interface 303 is mainly used for realizing communication between modules, apparatus, units, and/or devices in the embodiments of the present application. An input device and/or an output device may also be connected through the communication interface 303.

The bus 304 includes hardware, software, or both of them, to couple components of the electronic device 300 to each other. As an example rather than limitation, the bus 304 may include an Accelerated Graphics Port (AGP) or any other graphics bus, an Enhanced Industry Standard Architecture (EISA) bus, a Front Side Bus (FSB), a Hyper Transport (HT) interconnect, an Industry Standard Architecture (ISA) bus, InfiniBand interconnect, a Low Pin Count (LPC) bus, memory bus, an Micro Channel Architecture (MCA) bus, a Peripheral Component Interconnect (PCI) bus, a PCI-Express (PCI-E) bus, a Serial Advanced Technology Attachment (SATA) bus, a Video Electronics Standards Association Local Bus (VLB) bus or any other suitable bus or any combination of two or more of the above. When appropriate, the bus 304 may include one or more buses. Although embodiments of the present application describe and illustrate particular buses, any suitable bus or interconnect is contemplated by the present application.

In a fourth aspect of the present application, an object matching system is provided, and the object matching system may include a first device and a second device. The first device may be configured to perform the object matching method in the above embodiments. The second device is configured to perform a vector similarity calculation method with privacy protection with the first device. For details of the first device and the second device, reference can be made to the relevant description in the above embodiments, and the same technical effects can be achieved, which is not repeated herein to avoid repetition.

In some examples, the second device may also perform the object matching method in the above embodiments as the first device.

In a fifth aspect of the present application, a computer readable storage medium is provided, the computer readable storage medium has computer program instructions stored thereon, which when executed by a processor, may implement the object matching method in the above embodiments, and the same technical effects can be achieved, which is not repeated herein to avoid repetition. Herein, the computer-readable storage medium may include a non-transitory computer-readable storage medium, such as a Read-Only Memory (ROM), a Random Access Memory (RAM), a magnetic disk or an optical disk, and the like, which is not limited herein.

In a sixth aspect of the present application, a computer program product is provided, instructions in the computer program product, when executed by a processor of an electronic device, cause the electronic device to perform the object matching method in the above embodiments, and the same technical effects can be achieved, which is not repeated herein to avoid repetition.

It should be noted that various embodiments in the present specification are described in a progressive manner, the same or similar parts among various embodiment can refer to each other, and each of the embodiment focuses on the differences with other embodiments. For the embodiments of the apparatus, the device, the system, the computer readable storage medium, and the computer program product, reference can be made to the description part of the embodiments of the method for related parts. The application is not limited to the specific steps and structures described above and shown in the figures. Those skilled in the art can make various changes, modifications and additions, or change the order between steps after understanding the gist of the application. Moreover, for the sake of brevity, a detailed description of known methods and technologies is omitted here.

Aspects of the present application are described above with reference to flowcharts and/or block diagrams of methods, devices (systems) and computer program products according to the embodiments of the present application. It will be understood that, each block of the flow charts and/or block diagrams, and combinations of blocks in the flow charts and/or block diagrams, can be implemented by computer program instructions. These computer program instructions may be provided to a processor of a general purpose computer, a special purpose computer, or other programmable data processing apparatus to produce a machine, such that the instructions, which being executed via the processor of the computer or other programmable data processing apparatus, enable the implementation of the functions/actions specified in one or more blocks in the flow charts and/or block diagrams. Such a processor may be, but is not limited to, a general purpose processor, a special purpose processor, an application specific processor, or field programmable logic circuit. It should also be understood that, each block in the block diagrams and/or flow charts, and a combination of any of blocks in the block diagrams and/or flow charts, may also be implemented by a special purpose hardware that performs the specified functions or actions, or a combination of special purpose hardware and computer instructions.

Those skilled in the art can understand that all the above embodiments are exemplary and not limiting. Different technical features in different embodiments can be combined to achieve beneficial effects. Those skilled in the art can understand and implement other variations of the disclosed embodiments after studying the accompanying drawings, the specification and claims. In the claims, the term "including" does not exclude other devices or steps, the numeral word "alan" does not exclude a plurality of the involved items; the terms "first" and "second" are used to indicate names and not to indicate any particular order. Any reference numeral in the claims should not be construed as limiting the scope of protection. The functions of several parts recited in the claims can be implemented by a single hardware or software module. The presence of certain technical features in different dependent claims does not indicate that these technical features cannot be combined to achieve beneficial effects.

## Claims

1. An object matching method applicable to a first device, the method comprising:

    selecting any one of first feature vectors of two or more first objects in the first device as a first target feature vector, and calculating a first similarity parameter between the first target feature vector and each of the first feature vectors;
    obtaining, based on the first target feature vector and a second feature vector of a second object in a second device, a second similarity parameter between the second feature vector and the first target feature vector by a vector similarity calculation method with privacy protection;
    selecting a first feature vector to be matched from the first feature vectors according to the first similarity parameter, the second similarity parameter, and a preset similarity matching threshold, wherein a number of the first feature vector to be matched is less than a number of the first feature vectors; and
    determining, based on the first feature vector to be matched and the second feature vector, the first object successfully matched with the second object according to the similarity matching threshold by the vector similarity calculation method with privacy protection.

**2.** The method according to claim 1, wherein selecting the first feature vector to be matched from the first feature vectors according to the first similarity parameter, the second similarity parameter, and the preset similarity matching threshold comprises:

calculating a first difference and a first sum of the second similarity parameter and the similarity matching threshold;
selecting the first similarity parameter closest to the first difference as a first boundary similarity parameter;
selecting the first similarity parameter closest to the first sum as a second boundary similarity parameter;
selecting the first feature vector for which the first similarity parameter is greater than the first boundary similarity parameter and less than the second boundary similarity parameter as a candidate feature vector for matching, and determining the first feature vector to be matched from the candidate feature vector for matching.

**3.** The method according to claim 1, wherein selecting the first feature vector to be matched from the first feature vectors according to the first similarity parameter, the second similarity parameter, and the preset similarity matching threshold comprises:

sorting the first feature vectors in an order of the first similarity parameters from biggest to smallest or from smallest to biggest;
calculating a first difference and a first sum of the second similarity parameter and the similarity matching threshold;
selecting the first feature vector for which the first similarity parameter is closest to the first difference as a first boundary feature vector;
selecting the first feature vector for which the first similarity parameter is closest to the first sum as a second boundary feature vector; and
selecting the first feature vector positioned between the first boundary feature vector and the second boundary feature vector as a candidate feature vector for matching, and determining the first feature vector to be matched from the candidate feature vector for matching.

**4.** The method according to claim 2 or 3, wherein the candidate feature vector for matching is the first feature vector to be matched.

**5.** The method according to claim 2 or 3, wherein a number of the candidate feature vector for matching is greater than 1,
determining the first feature vector to be matched from the candidate feature vector for matching comprises:

selecting any one of the candidate feature vectors for matching as the first target feature vector, and respectively calculating a third similarity parameter between the first target feature vector and each of the candidate feature vectors for matching;
obtaining, based on the first target feature vector and the second feature vector, a fourth similarity parameter between the second feature vector and the first target feature vector by the vector similarity calculation method with privacy protection; and
determining a new candidate feature vector for matching according to the third similarity parameter, the fourth similarity parameter, and the preset similarity matching threshold until the number of the candidate feature vectors for matching is less than or equal to 1.

**6.** The method according to claim 1, wherein determining, based on the first feature vector to be matched and the second feature vector, the first object successfully matched with the second object according to the similarity matching threshold by the similarity calculation method with privacy protection comprises:

obtaining, based on the first feature vector to be matched and the second feature vector, a fifth similarity parameter of the first feature vector to be matched and the second feature vector respectively by the vector similarity calculation method with privacy protection; and
determining that the first object corresponding to the first feature vector to be matched is successfully matched with the second object under a condition that the fifth similarity parameter is less than or equal to the similarity matching threshold.

**7.** The method according to claim 1, further comprising:

based on a selected first feature vector and a second target feature vector in the second device and by the vector similarity calculation method with privacy protection, enabling the second device to obtain a sixth similarity between the first feature vector and the second target feature vector, wherein the second target feature vector is any second feature vector selected by the second device from second feature vectors of two or more second objects;
based on the first feature vector and a second feature vector to be matched selected by the second device according to the sixth similarity, a seventh similarity, and the similarity matching threshold and by the vector similarity calculation method with privacy protection, enabling the second device to determine the second object successfully matched with the first object according to the similarity matching threshold, wherein the seventh similarity include a similarity between the second target feature vector and each of the second feature vectors calculated by the second device.

8. The method according to claim 7, wherein the selected first feature vector comprises the first feature vector that is not successfully matched with the second feature vector.

9. The method according to claim 1, wherein after selecting any one of the first feature vectors as the first target feature vector, and calculating the first similarity parameter between the first target feature vector and each of the first feature vectors, the method further comprises:

generating a similarity parameter matrix according to the first similarity parameters obtained in a way that each of the first feature vectors acts as the first target feature vector, wherein the first similarity parameters in a same row of the similarity parameter matrix correspond to a same first target feature vector, or the first similarity parameters in a same column of the similarity parameter matrix correspond to a same first target feature vector.

10. The method according to claim 1, wherein the similarity parameter comprises Euclidean distance or cosine similarity.

11. An object matching apparatus comprising:

a calculation module configured to select any one of first feature vectors of two or more first objects in the object matching apparatus as a first target feature vector, and calculating a first similarity parameter between the first target feature vector and each of the first feature vectors; an interactive calculation module configured to obtain, based on the first target feature vector and a second feature vector of a second object in another apparatus, a second similarity parameter between the second feature vector and the first target feature vector by a vector similarity calculation method with privacy protection; a selection module configured to select a first feature vector to be matched from the first feature vectors according to the first similarity parameter, the second similarity parameter, and a preset similarity matching threshold, wherein a number of the first feature vector to be matched is less than a number of the first feature vectors; and

a matching module configured to determine, based on the first feature vector to be matched and the second feature vector, the first object successfully matched with the second object according to the similarity matching threshold by the vector similarity calculation method with privacy protection.

12. An electronic device comprising a processor and a memory storing computer program instructions; wherein the processor, when executing the computer program instructions, implements the object matching method according to any one of claims 1 to 10.

13. An object matching system comprising:

a first device configured to perform the object matching method according to any one of claims 1 to 10; and a second device configured to perform a vector similarity calculation method with privacy protection with the first device.

14. A computer readable storage medium having computer program instructions stored thereon, wherein the computer program instructions, when executed by a processor, implement the object matching method according to any one of claims 1 to 10.

15. A computer program product, wherein instructions in the computer program product, when executed by a processor of an electronic device, cause the electronic device to perform the object matching method according to any one of claims 1 to 10.

Device A ⟺ Device B

**Fig. 1**

Device A ⟺ Device B

Device C

**Fig. 2**

selecting any one of first feature vectors of two or more first objects in the first device as a first target feature vector, and calculating a first similarity parameter between the first target feature vector and each of the first feature vectors — S101

obtaining, based on the first target feature vector and a second feature vector of a second object in a second device, a second similarity parameter between the second feature vector and the first target feature vector by a vector similarity calculation method with privacy protection — S102

selecting a first feature vector to be matched from the first feature vectors according to the first similarity parameter, the second similarity parameter, and a preset similarity matching threshold — S103

determining, based on the first feature vector to be matched and the second feature vector, the first object successfully matched with the second object according to the similarity matching threshold by the vector similarity calculation method with privacy protection — S104

**Fig. 3**

selecting any one of first feature vectors of two or more first objects in the first device as a first target feature vector, and calculating a first similarity parameter between the first target feature vector and each of the first feature vectors $\quad$ S101

obtaining, based on the first target feature vector and a second feature vector of a second object in a second device, a second similarity parameter between the second feature vector and the first target feature vector by a vector similarity calculation method with privacy protection $\quad$ S102

calculating a first difference and a first sum of the second similarity parameter and the similarity matching threshold $\quad$ S1031a

selecting the first similarity parameter closest to the first difference as a first boundary similarity parameter $\quad$ S1032a

selecting the first similarity parameter closest to the first sum as a second boundary similarity parameter $\quad$ S1033a

selecting the first feature vector for which the first similarity parameter is greater than the first boundary similarity parameter and less than the second boundary similarity parameter as a candidate feature vector for matching, and determining the first feature vector to be matched from the candidate feature vector for matching $\quad$ S1034a

sorting the first feature vectors in an order of the first similarity parameters from biggest to smallest or from smallest to biggest $\quad$ S1031b

calculating a first difference and a first sum of the second similarity parameter and the similarity matching threshold $\quad$ S1032b

selecting the first feature vector for which the first similarity parameter is closest to the first difference as a first boundary feature vector $\quad$ S1033b

selecting the first feature vector for which the first similarity parameter is closest to the first sum as a second boundary feature vector $\quad$ S1034b

selecting the first feature vector positioned between the first boundary feature vector and the second boundary feature vector as a candidate feature vector for matching, and determining the first feature vector to be matched from the candidate feature vector for matching $\quad$ S1035b

determining, based on the first feature vector to be matched and the second feature vector, the first object successfully matched with the second object according to the similarity matching threshold by the vector similarity calculation method with privacy protection $\quad$ S104

**Fig. 4**

selecting any one of first feature vectors of two or more first objects in the first device as a first target feature vector, and calculating a first similarity parameter between the first target feature vector and each of the first feature vectors

S101

based on a selected first feature vector and a second target feature vector in the second device and by the vector similarity calculation method with privacy protection, enabling the second device to obtain a sixth similarity between the first feature vector and the second target feature vector

S105

obtaining, based on the first target feature vector and a second feature vector of a second object in a second device, a second similarity parameter between the second feature vector and the first target feature vector by a vector similarity calculation method with privacy protection

S102

based on the first feature vector and a second feature vector to be matched selected by the second device according to the sixth similarity, seventh similarity, and the similarity matching threshold and by the vector similarity calculation method with privacy protection, enabling the second device to determine the second object successfully matched with the first object according to the similarity matching threshold

S106

selecting a first feature vector to be matched from the first feature vectors according to the first similarity parameter, the second similarity parameter, and a preset similarity matching threshold

S103

determining, based on the first feature vector to be matched and the second feature vector, the first object successfully matched with the second object according to the similarity matching threshold by the vector similarity calculation method with privacy protection

S104

**Fig. 5**

200

Calculation module 201

Interactive calculation module 202

Selection module 203

Matching module 204

**Fig. 6**

300

Memory 301

Processor 302

Communication interface 303

Bus 304

**Fig. 7**

## INTERNATIONAL SEARCH REPORT

International application No.

**PCT/CN2023/130090**

### A. CLASSIFICATION OF SUBJECT MATTER

G06F 18/22(2023.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

DWPI, CNKI, IEEE, CNTXT, ENTXTC, USTXT: 对象, 向量, 匹配, 相似度, 筛选, 阈值, 隐私保护, 第二, 特征, object, match +, second, vector, feature, similarity, privacy, protect+, threshold

### C. DOCUMENTS CONSIDERED TO BE RELEVANT

| Category* | Citation of document, with indication, where appropriate, of the relevant passages | Relevant to claim No. |
|---|---|---|
| PX | CN 115545122 A (CHINA UNIONPAY CO., LTD.) 30 December 2022 (2022-12-30) claims 1-15 | 1-15 |
| X | 苏舟 (SU, Zhou). "基于向量空间范围搜索的大型软件相似度检测 (Non-official translation: Large-Scale Software Similarity Detection on the Basis of Vector Space Range Search)" 中国优秀硕士学位论文全文数据库 (China Master's Theses Full-text Database), No. 02, 15 February 2009 (2009-02-15), ISSN: 1674-0246, page 19, line 10-page 38, line 15 | 1-5, 9-15 |
| A | CN 112613310 A (CHENGDU YANCHUANG QIXIN INFORMATION TECHNOLOGY CO., LTD.) 06 April 2021 (2021-04-06) entire document | 1-15 |
| A | US 2018373787 A1 (BEIJING BAIDU NETCOM SCIENCE AND TECHNOLOGY CO., LTD.) 27 December 2018 (2018-12-27) entire document | 1-15 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 January 2024** | **31 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/130090**

| Patent document cited in search report | | | Publication date (day/month/year) | Patent family member(s) | | | Publication date (day/month/year) |
|---|---|---|---|---|---|---|---|
| CN | 115545122 | A | 30 December 2022 | None | | | |
| CN | 112613310 | A | 06 April 2021 | None | | | |
| US | 2018373787 | A1 | 27 December 2018 | CN | 107330023 | A | 07 November 2017 |

Form PCT/ISA/210 (patent family annex) (July 2022)

**EP 4 582 981 A1**

**REFERENCES CITED IN THE DESCRIPTION**

**Patent documents cited in the description**

- CN 202211497502